# EUROPEAN PATENT APPLICATION

(11) **EP 1 701 303 A1**
(43) Date of publication of application: **13.09.2006**
(21) Application number: 06075485.0
(22) Date of filing: 02.03.2006
(51) Int. Cl.: G06Q 10/00, G06Q 30/00

(54) **Method and apparatus for receiving a product notice for a component in an assembly using a programmed component list**

(30) Priority: 03.03.2005 US 658420 P
(71) Applicant: J'maev, Jack Ivan, Chino CA 91710 (US); Jones, Addison Brooke, Yorba Linda CA 92886 (US); Petrov, Tzvetelyn Petrov, Chino CA 91710 (US)
(72) Inventor: J'maev, Jack Ivan, Chino CA 91710 (US); Jones, Addison Brooke, Yorba Linda CA 92886 (US); Petrov, Tzvetelyn Petrov, Chino CA 91710 (US)
(74) Representative: Andreeva, Natasha Petkova

(57) **Abstract**

Disclosed herein are a method and various embodiments thereof for receiving a product notice by means of receiving a component product identifier (5) for one or more components included in an assembly; storing the one or more component product identifiers (10); receiving a product notice message (15); extracting a target product identifier (17) from the product notice message; and issuing an indication (25) when the target product identifier is substantially equivalent to at least one of the one or more stored component product identifiers (20).

## Description

### RELATED APPLICATIONS

The present application is a continuation-in-part of United States Patent Application No. xx/xxx,xxx entitled "Method and Apparatus for Receiving Product Notices" by J'maev filed on July 7, 2003, which itself claimed priority to United States Provisional Application No. 60/394,980 filed on July 9, 2002, entitled "Method and Apparatus for Product Recall", by J'maev ; the present application also claims priority to United States Provisional Application No. 60/658,420 filed on March 3, 2005 entitled "Method and Apparatus for Receiving a Product Notice for a Component in an Assembly Using a Programmed Component List" by J'maev et al.

### BACKGROUND

Applicant has described numerous novel methods and apparatus for delivering a product notice to a product user by means of a technique now called "product centric notification". As described in the first incorporated reference, a small receiver is integrated into a product for the purpose of receiving a notice which can be presented to a user in current possession of the product. Applicant further describes in the second incorporated reference a technique for subordinate product notification. Using subordinate product notification, a notice is dispatch to a single receiver, wherein the single receiver is responsive to a plurality of product identifiers. In application, each of the product identifiers to which the single receiver is responsive corresponds to a plurality of components in an assembly. It is important to realize that subordinate product notification provides a manufacturer a novel means by which it may direct a product notice is to a product, wherein the product is integrated into a finished assembly.

Is also important to appreciate that, in the first incorporated reference, there is described a technique by which an alphanumeric message to be communicated to a receiver integrated in a product. Upon receipt in the product, the alphanumeric message is presented to a user. This enables a manufacturer to direct specific remedial instructions to a user in current possession of a product. For example, this technique enables a product manufacture to specifically warn a user not to use a particular product that is defective. All of the methods and apparatus that Applicant has heretofore described, according to one illustrative use case, are applicable in the realm of the product recall notification. However, these techniques are also applicable to a wide variety of notification requirements where a particular type of notice may need to be sent to a current product user.

In one illustrative use case, automobile manufacturers painstakingly track components that are integrated into an assembly. This is true at essentially all levels. For example, the components that are integrated into a finished automobile are tracked according to part number and a lot-date code. In the automotive case, each automobile is assigned a vehicle identification number. As components are integrated into a finished automobile, the part number and a lot-date code of the component is associated with the vehicle identification number. Whenever a notification needs to be sent to a user because of a defective component (e.g. a defective alternator that can cause a vehicle fire), a back-end system is consulted in order to determine all of the vehicle identification numbers which are associated with a particular part number and lot-date code of the defective component. Then, in yet an additional step, the users who are thought to be in possession of the automobiles assigned to those determined vehicle identification numbers are contacted and warned about the defective component. The same type of tracking is often applied to a defective component within an assembly that is itself integrated into a higher-level assembly. For example, a radio installed in a car is an assembly of components and it itself is a component in the car.

Upon consideration of alphanumeric messaging capabilities, it becomes clear that a great deal of data bandwidth is required to effectively communicate such an alphanumeric message to a wide variety of products. This is especially true where a particular product is integrated into an assembly. Because of the way many manufacturers track which components are integrated into which assemblies, these manufacturers end up sending a notice to each assembly owner individually. This is true even when a manufacturer uses product centric notification. Considering the case where an alternator is found in a collection of automobiles, each identified by a vehicle identification number, a separate notification message would need to be sent to each automobile according to the vehicle identification number. Again, this only serves to magnify the data bandwidth problem associated with an alphanumeric message akin to "you alternator may catch fire - take the vehicle to your nearest dealer". This message would need to be sent as many times as there are automobiles with the defective alternator; each message addressed, for example, according to a vehicle identification number. It should be appreciated that this is only an example of one type of message that could be sent along with a product centric notification message dispatched to each vehicle that has the defective alternator. This example is only meant to illustrate the problems association with the use of product centric notification in one illustrative use case, a defective alternator integrated into an automobile, and should not be read as limiting the scope of the Applicant's claims either in the present application nor in any prior applications nor in any subsequent applications, any or all of which describe various refinements of methods and embodiments of product centric notification.

### SUMMARY

Disclosed herein are a method and various embodiments thereof for receiving a product notice by means of receiving a component product identifier for one or more components included in an assembly; storing the one or more component product identifiers; receiving a product notice message; extracting a target product identifier from the product notice message; and issuing an indication when the target product identifier is substantially equivalent to at least one of the one or more stored component product identifiers.

### BRIEF DESCRIPTION OF THE DRAWINGS

Several alternative embodiments will hereinafter be described in conjunction with the appended drawings and figures, wherein like numerals denote like elements, and in which:
Fig. 1 is a flow diagram that depicts one alternative illustrative method for receiving a product notice;
Fig. 2 is a flow diagram that depicts several alternative example methods for receiving a component product identifier;
Fig. 3 is a flow diagram that depicts one alternative illustrative method for receiving a component product identifier by means of an electromagnetic field;
Fig. 4 is a flow diagram that depicts alternative illustrative methods for detecting an electromagnetic field;
Fig. 5 is a flow diagram that depicts one alternative illustrative method for receiving a component product identifier by means of a time-varying electrical signal;
Fig. 6 is a flow diagram that depicts one alternative illustrative method for receiving a component product identifier by means of a time-varying pressure wave;
Fig. 7 is a flow diagram that depicts one alternative illustrative method for receiving a product identifier by means of a spatially-varying light pattern'
Fig. 8 is a flow diagram that depicts one alternative illustrative method for storing one or more component product identifiers;
Fig. 9 is a flow diagram that depicts one alternative illustrative method for receiving a product notice;
Fig. 10 is a flow diagram that depicts one alternative illustrative method for receiving a product notice;
Fig. 11 is a flow diagram that depicts one alternative illustrative method for receiving a product notice;
Fig. 12 is a block diagram that depicts one alternative example embodiment of a product notice receiver;
Fig. 13 is a pictorial diagram that depicts several alternative embodiments of a component product identifier data framer;
Fig. 13A is a pictorial diagram that depicts several alternative example embodiments of a product notice message data framer;
Fig. 14 is a block diagram that depicts one alternative example embodiment of receiver;
Figs. 15A and 15B are block diagrams that depict alternative example embodiments of detectors that enable wireless reception;
Fig. 16 is a block diagram that depicts one alternative example embodiment of receiver 180 where wired interface is preferred;
Fig. 17 is a block diagram that depicts one alternative example embodiment of receiver 180 for receiving acoustic signals;
Fig. 18A is a pictorial diagram that depicts one alternative example embodiment of receiver;
Fig. 19A is a block diagram that depicts one alternative example embodiment of memory;
Fig. 19B is a block diagram that depicts an alternative example embodiment of a memory that is backed up using a power backup circuit;
Fig. 20 is a block diagram that depicts one alternative example embodiment of a product notice receiver that includes product specific notice capability;
Fig. 21 is a block diagram that depicts one alternative embodiment of a product notice receiver that includes a standard notice message capability;
Fig. 22 is a block diagram that depicts one alternative embodiment of a product notice receiver capable of accepting a replacement component identifier;
Fig. 23 is a block diagram that depicts several example alternative embodiments of a product notice receiver capable of accepting a component list;
Fig. 24 is a data flow diagram that depicts the internal operation of a product notice receiver as it operates to receive a product notice; and
Fig. 25 is a data flow diagram that depicts the internal operation of a product notice receiver as it operates to receive a product specific notice.

### DETAILED DESCRIPTION

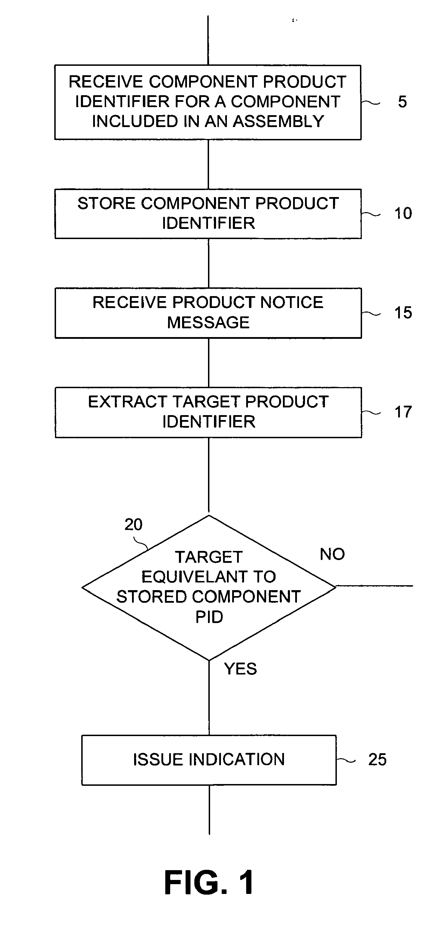

Fig. 1 is a flow diagram that depicts one alternative illustrative method for receiving a product notice. According to this illustrative method, a product notice is received by receiving a component product identifier for one or more components included in an assembly (step 5). Once the component product identifier is received, it is then stored (step 10). It should be appreciated that when more than one component product identifier is received, all such received component product identifiers are stored in a like manner. A product notice message is then received (step 15). Typically, the product notice message will include a target product identifier. Accordingly, a target product identifier is extracted from the product notice message (step 17). The target product identifier is compared against a previously stored component product identifier for a component included in the assembly (step 20). An indication is issued (step 25) when the target product identifier extracted from a product notice message is substantially equivalent to at least one of the stored component product identifiers.

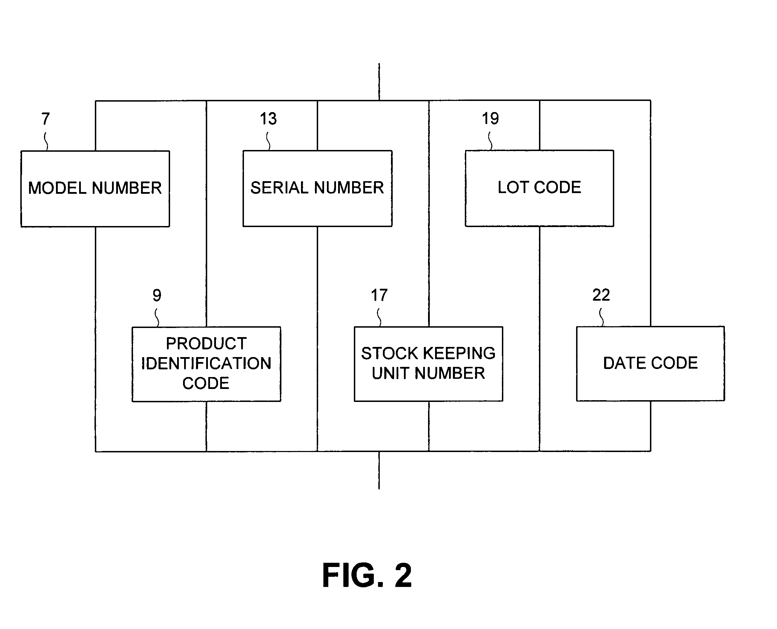

Fig. 2 is a flow diagram that depicts several alternative example methods for receiving a component product identifier. According to one illustrative use case, the present method can be applied in a manufacturing environment where various components are amalgamated into an assembly. For example, consider an environment where automobiles are manufactured. An automobile typically includes various components such as motors, tires, alternators, radiators and the like. According to this example illustrative use case, an automobile is manufactured by combining these various components. Typically, each of the various components included in an automobile will be identified by a product identifier. A product identifier includes, but is not limited to at least one of a model number, a product identification code, a serial number, a stock keeping unit number, a lot code and a date code. According to several example variations of the present method, receiving a component product identifier comprises receiving at least one of a model number (step 7), a product identification code (step 9), a product serial number (step 13), a product stock keeping unit (SKU) number (step 17), a lot code (step 19) and a date code (step 22). It should be appreciated that a product identifier can include a wide variety of distinctive characteristics and the claims appended hereto are not intended to be limited to any example product identifier described herein.

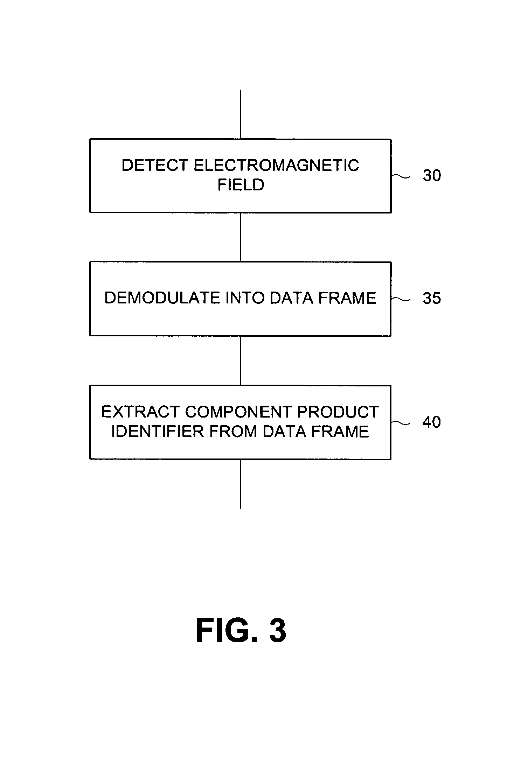

Fig. 3 is a flow diagram that depicts one alternative illustrative method for receiving a component product identifier by means of an electromagnetic field. According to this alternative method, a component product identifier is received by detecting an electromagnetic field (step 30). The electromagnetic field is then demodulated into a data frame (step 35). A component product identifier is then extracted from the data frame (step 40).

According to one illustrative use case, the present method can be applied in a manufacturing environment where a list of components that are installed in an assembly is programmed into a product notice receiver. In a typical manufacturing environment, it is desirable to minimize the physical interfaces to an assembly used in the manufacturing process. Accordingly, various methods described herein for programming a product notice receiver with a list of components included in an assembly relies on wireless conveyance of a component list to a product notice receiver included in the assembly. Such wireless conveyance relies on transmission of an electromagnetic field that is encoded with a component product identifier. It should be appreciated that a wide variety of wireless conveyance techniques can be utilized when a component list is programmed into a product notice receiver. Accordingly, the claims appended hereto should not be limited to any example method for wireless reception of a component product identifier.

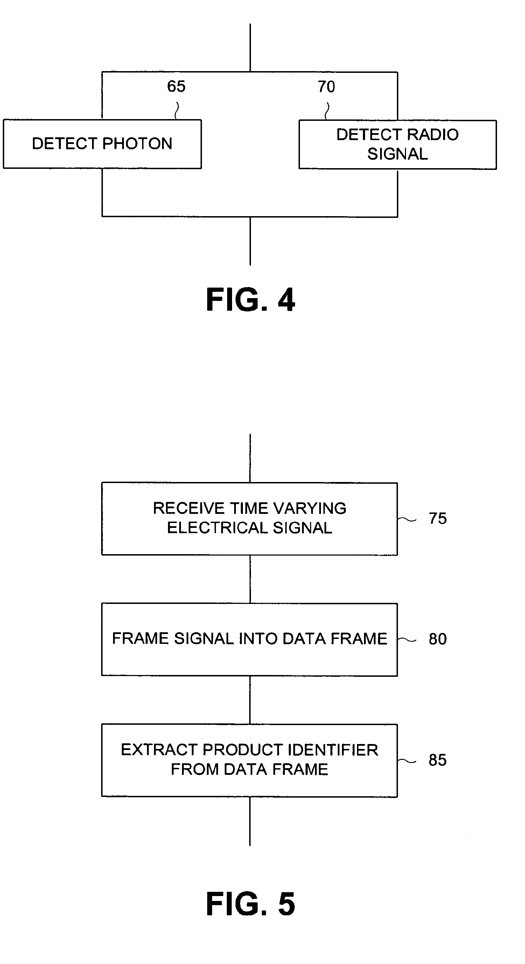

Fig. 4 is a flow diagram that depicts alternative illustrative methods for detecting an electromagnetic field. It should be appreciated that a component product identifier can be encoded in an electromagnetic field in any frequency range. For example, a component product identifier, according to one illustrative use case, is encoded in an electromagnetic field whose frequency is within the range of optical energy (e.g. infra-red, visible and ultra-violet light). Such electromagnetic optical energy is detected via an optical sensor, such as a photo-cell or a photodiode. According to one variation of the present method, an electromagnetic field is detected by detecting a photon of light (step 65). In this variation of the present method, a photon of light is converted into an electrical signal. The electrical signal is then processed to capture a data frame from whence a component product identifier is extracted. It should be appreciated that, although typically used to affect a wireless conveyance of a component product identifier to a product notice receiver integrated into an assembly, optical energy can likewise be contained in a physical medium. For example, a light pipe or fiber-optical cable can be used to direct optical energy encoded with a component product identifier to an assembly or to a product notice receiver included therein. Accordingly, one variation of the present method provides for receiving optical energy from a confined channel including but not limited to a light pipe and a fiber optical cable.

In yet another illustrative use case, a component product identifier is encoded in an electromagnetic field whose frequency resides in the radio frequency range. As such, one example variation of the present method provides for detecting a radio signal (step 70). Typically, the detected radio frequency signal is demodulated into a time-varying electrical signal. As such, a data frame is captured by processing the time-varying electrical signal over an interval of time. A component product identifier is then extracted from the data frame. It should again be appreciated that any form of electromagnetic field can be used to encode a component product identifier and a corresponding method can be used to detect the encoded energy and extract a component product identifier there from. As such, the claims appended hereto should not be limited to any example method for detecting an electromagnetic field encoded with a component product identifier. Again, although radio frequency energy is typically used to affect a wireless conveyance, it can also be received by means of a contained channel such as coaxial cable. As such, one variation of the present method provides for receiving a component product identifier as an encoded electromagnetic signal contained in a physical channel including but not limited to coaxial cable.

Fig. 5 is a flow diagram that depicts one alternative illustrative method for receiving a component product identifier by means of a time-varying electrical signal. In some manufacturing environments, there is less concern about the use of physical connections in order to convey a component product identifier to a product notice receiver integrated into a product. According to this alternative method, a component product identifier is received by detecting a time-varying electrical signal (step 75). For example, a physical electrical connection can be made with a product notice receiver integrated into an assembly. The time-varying electrical signal is then framed into a data frame (step 80). A component product identifier is then extracted from the data frame (step 85). Various methods for receiving a time-varying electrical signal can be utilized. One variation of the present method involves receiving a time-varying electrical signal which is conditioned according to a serial interface protocol, such as RS232. A component product identifier encoded in such signal is received via a serial interface communication port. Another variation of the present method involves receiving a time-varying electrical signal which is conditioned according to a parallel interface protocol. According to this variation, a parallel interface port is utilized in receiving a product identifier. It should be appreciated that a wide variety of techniques can be utilized to receive time-varying electrical signals according to various signal conditioning schemes. Accordingly, the claims appended hereto should not be limited to any example method for receiving a time-varying signal encoded with a product identifier.

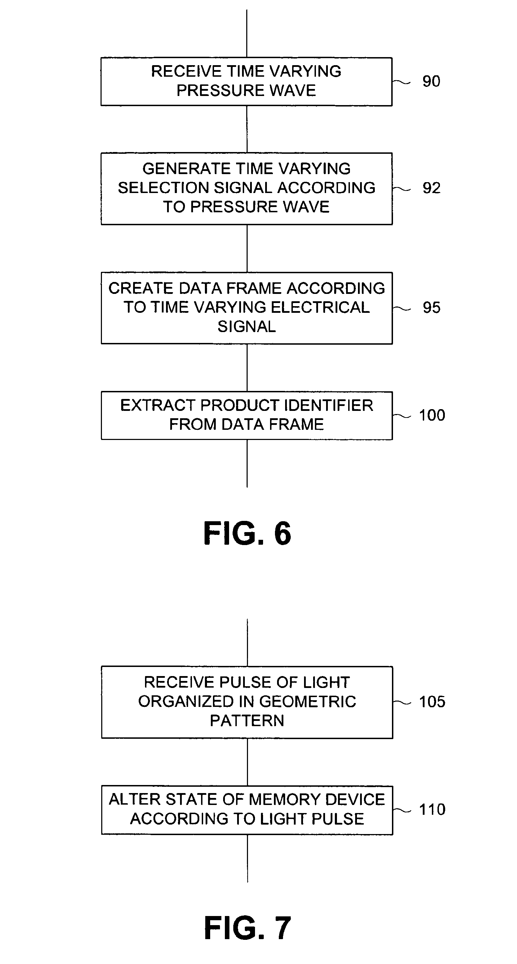

Fig. 6 is a flow diagram that depicts one alternative illustrative method for receiving a component product identifier by means of a time-varying pressure wave. It should be appreciate that sonic energy, according to one illustrative use case, is encoded with a component product identifier and is directed to a product notice receiver included in an assembly. According to this alternative method, a component product identifier is received by detecting a time-varying pressure wave (step 90). The time-varying pressure wave is then converted into a time-varying electrical signal (step 92). The time-varying electrical signal is then framed into a data frame (step 95). A component product identifier is then extracted from the data frame (step 100). Various methods for receiving a time-varying pressure wave can be utilized. One variation of the present method involves receiving a time-varying pressure wave in the form of a sound wave. A component product identifier encoded in such wave can be received via an appropriate sound detector such as a microphone. Another variation of the present method involves receiving a time-varying pressure wave in the form of an ultrasound wave. According to this method, a product identifier, encoded in an ultrasound wave, is received by an ultrasound sensor. It should be appreciated that a wide variety of techniques can be utilized to receive time-varying pressure waves. Accordingly, the claims appended hereto should not be limited to any example method for receiving a time-varying pressure wave encoded with a product identifier.

Fig. 7 is a flow diagram that depicts one alternative illustrative method for receiving a product identifier by means of a spatially-varying light pattern. According to this alternative method, a product identifier is received by detecting a spatially-varying light pattern (step 105). The spatially varying light pattern is used to establish a data state in a memory device (step 110). It should be appreciated that this alternative method can be used in at least two different ways. According to one variation of the present method, the spatially-varying light pattern is imposed on a memory device to alter its state in accordance with the spatially-varying light pattern. For example, an optically programmable memory can be used to receive a pattern of light and then alter its state accordingly. According to yet another variation of the present method, a spatially varying light pattern can be imparted onto a manufacturing tool used to set a memory in a semiconductor device. This method is often used to manufacture a device that includes a "mask-programmed" read-only-memory (ROM). It should be appreciated that a wide variety of techniques can be utilized to receive spatially-varying light patterns. Accordingly, the claims appended hereto should not be limited to any example method for receiving a spatially-varying light pattern encoded with a component product identifier.

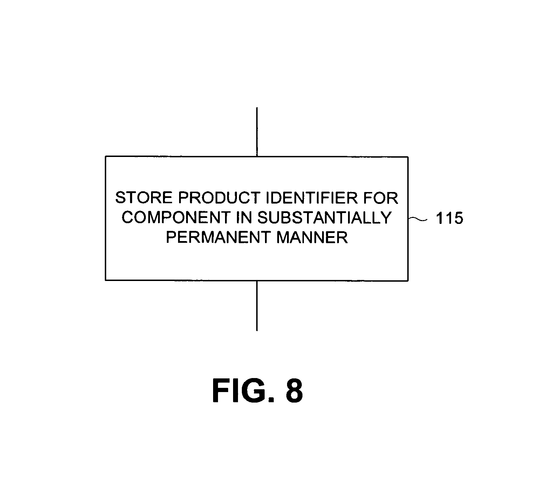

Fig. 8 is a flow diagram that depicts one alternative illustrative method for storing one or more component product identifiers. According to this alternative method, one or more component product identifiers are stored in a substantially permanent manner (step 115). According to one illustrative use case, a flash memory device is used for storing a component product identifier in a substantially permanent manner. In another illustrative use case, a battery-backed-up random access memory (RAM) device is used for storing a component product identifier in a substantially permanent manner. In yet another illustrative use case, a Read Only Memory (ROM) device is used for storing a product identifier in a substantially permanent manner. According to another variation of the present method a product identifier is stored in a memory device by storing electromagnetic fields in such memory device. According to one illustrative use case, a light sensitive material such as a photographic film is used to store a product identifier in a substantially permanent manner. In another illustrative use case, a photo sensitive device such as a charge coupled device (CCD) is used to store a product identifier in a substantially permanent manner. It should be appreciated that a wide variety of techniques can be utilized to store one or more product identifiers in a memory device in a substantially permanent manner. Accordingly, the claims appended hereto should not be limited to any example method for storing a product identifier in a substantially permanent manner.

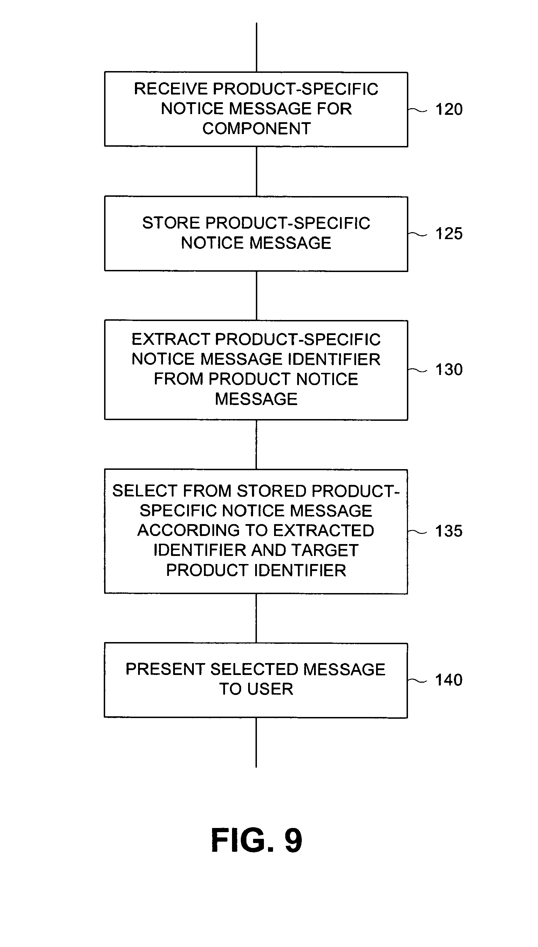

Fig. 9 is a flow diagram that depicts one alternative illustrative method for receiving a product notice. According to this alternative method, a product notice is received by further receiving one or more product-specific notice messages for a component included in an assembly (step 120). Accordingly, one or more product-specific notice messages are associated with a product identifier for a component included in an assembly. A product-specific message may be any message. Considering the example above, vehicle components may each have one or more product-specific notice messages associated with their operation. The engine may have messages such as "injector timing error", "valve mismatch" or "bearing load capacity is exceeded" just to mention a few. The vehicle's alternator may have messages associated with its operation such as "regulator voltage setting must be adjusted', "stator may overheat when ambient temperature rises above a certain level" or "output diodes must be replaced" just to mention a few. It should be appreciated that any message of any type pertaining to any state of a component in an assembly may thus be received and the examples described herein are by no means intended to limit the scope of messages that may be received.

It is important to note that a product-specific notice message is typically received when a product notice receiver included in an assembly is programmed with a list of components included in the assembly. As such, receipt of a product-specific notice message is typically received in association with a component product identifier during the manufacture of an assembly. Once the product-specific notice message is received, it is then stored (step 125). It should be appreciated that when more than one product-specific notice message is received, all such received product-specific notice messages are stored in a like manner.

A product notice message is typically received at some point after the product specific notice message is received and stored. Typically, a product notice message will include a product-specific notice identifier. A product-specific notice identifier is extracted from the product notice message (step 130). Once the product-specific notice identifier is extracted from the product notice message, a product-specific notice message is selected from the one or more stored product-specific notice messages according to the product-specific user notice identifier and the target product identifier included in the product notice message (step 135). Once the selection is made, the selected product-specific notice message is presented to a user (step 140).

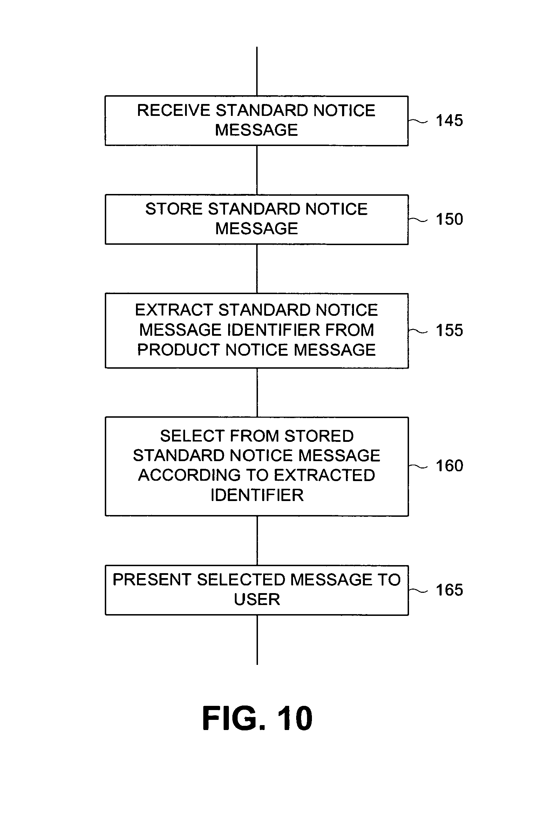

Fig. 10 is a flow diagram that depicts one alternative illustrative method for receiving a product notice. According to this alternative method, a product notice is received by receiving one or more standard notice messages (step 145). It should be appreciated that a standard notice message is typically received at the time an assembly is created (i.e. manufactured). As such, a standard notice message is received and programmed into a product notice receiver included in an assembly. Such messages are typically intended to describe a product condition for an assembly as a whole. Considering the example above, a standard notice message may be that "the vehicle must be inspected by a certain date", that "the vehicle must be taken to a repair facility" or that "the vehicle must not be operated for fear of extensive damage" just to mention a few. It should be appreciated that any message of any type pertaining to any state of an assembly or a component in an assembly may thus be received and the examples described herein are by no means intended to limit the scope of the claims appended hereto. Once the standard notice message is received, it is then stored (step 150). It should also be appreciated that when more than one standard notice message is received, all such received standard notice messages are stored in a like manner.

At some point after an assembly is manufactured, it may receive a product notice message. A product notice message includes a standard notice identifier. A standard notice identifier is then extracted from the product notice message (step 155). Once the standard notice identifier is extracted from the product notice message, a standard notice message is selected from the one or more stored standard user notice messages according to the standard notice identifier (step 160). Once the selection is made, the selected standard notice message is presented to a user (step 165).

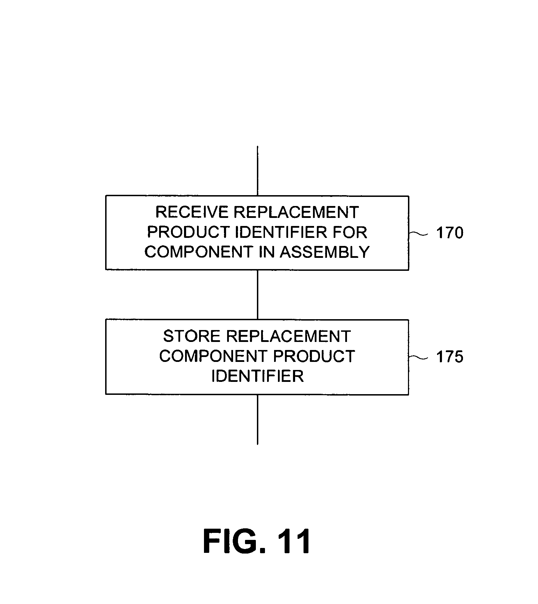

Fig. 11 is a flow diagram that depicts one alternative illustrative method for receiving a product notice. According to this alternative method, a product notice is received by further receiving a replacement product identifier for a component in an assembly (step 170). Such replacement product identifier is utilized to replace a product identifier that was previously received and stored. As such, the method will add versatility to the design by providing the capability of modifying a product identifier. For example, an automobile may be repaired using a replacement component wherein the replacement component is of a different lot-date code. In this situation, the originally stored product identifier for the component (which was stored as a *component product identifier)* can be replaced with a product identifier for the replacement component. Once the replacement product identifier is received, it is then stored (step 175) as a new component product identifier.

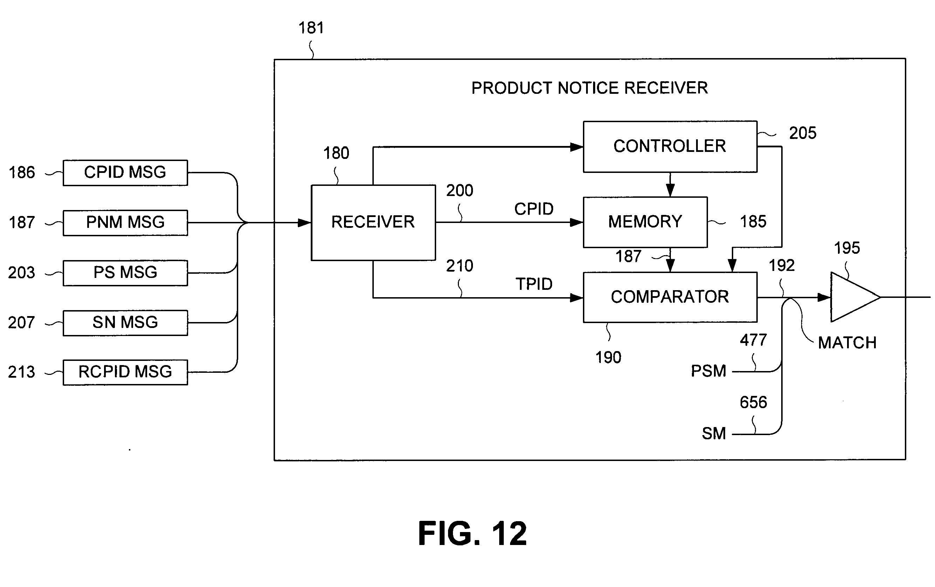

Fig. 12 is a block diagram that depicts one alternative example embodiment of a product notice receiver. According to this example embodiment, a product notice receiver 181 comprises a receiver 180, a memory 185, a comparator 190, and an output interface 195. According to this alternative embodiment, the receiver 180 receives at least one of a component product identifier (CPID) message 186 and a product notice message 187 (PNM). As the receiver 180 receives a component product identifier message 186, the receiver extracts a component product identifier from the received component product identifier (CPID) message 186. The receiver 180 generates a component product identifier indicator 200 that represents the extracted component product identifier. It should be appreciated that the receiver 180 is capable of generating successive component product identifier indicators 200 as additional component product identifier (CPID) messages 186 are received by the receiver 180. Hence, this embodiment is able to accommodate one or more component product identifiers, each corresponding to a component in an assembly. The memory 185, under the control of a controller 205 which is included in one alternative embodiment, is commanded to store a component product identifier indicator 200 as one or more of said indicators arriving from the receiver 180.

A received product notice message 187 includes a target product identifier. A target product identifier is indicative of an intended recipient of a product notice message. Put simply, when a message is to be directed to a user of a product, the target product identifier is used as a reception criteria. The target product identifier identifies which component a received product notice message is directed to. Accordingly, when the receiver 180 receives a product notice message 187, it extracts a target product identifier (TPID) from the product notice message 187. The receiver 180 then generates a target product identifier indicator 210 which is directed to the comparator 190. The comparator 190 generates a match signal 192 when the target product identifier indicator 210 is substantially equivalent to one of one or more component product identifiers stored in the memory 185. Because the memory 185 may have stored therein a plurality of component product identifiers, the controller 205 causes the memory 185 to present 187 individual component product identifiers to the comparator 190 on a successive basis. Concurrently, the controller 205 also causes the comparator 190 to compare each such presented 187 component product identifier to the target product identifier indicator 210 received from the receiver 180. When a match is detected, the comparator 190 issues a match signal 192 thereby activating the output interface 195. The output interface 195 generates an indication signal when it is activated by the match signal 192 generated by the comparator 190.

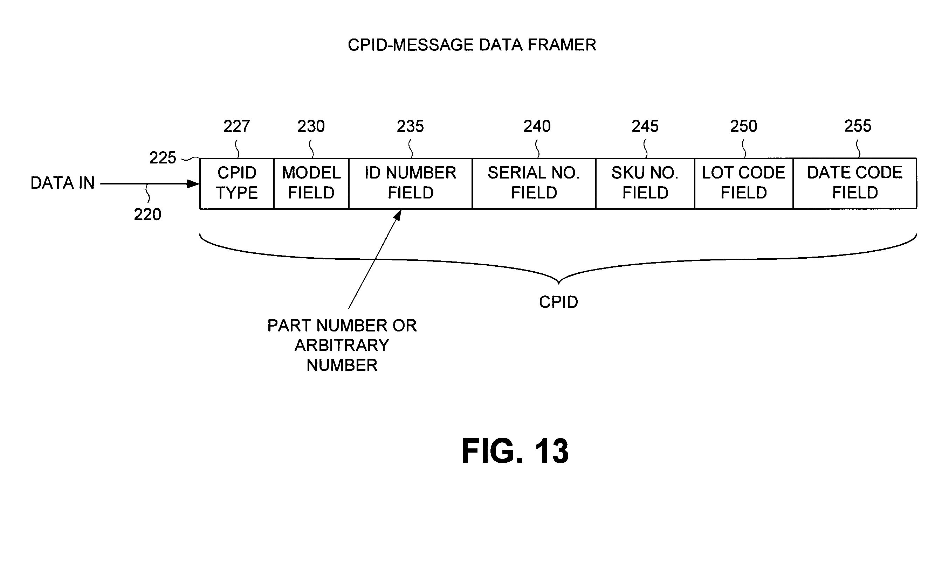

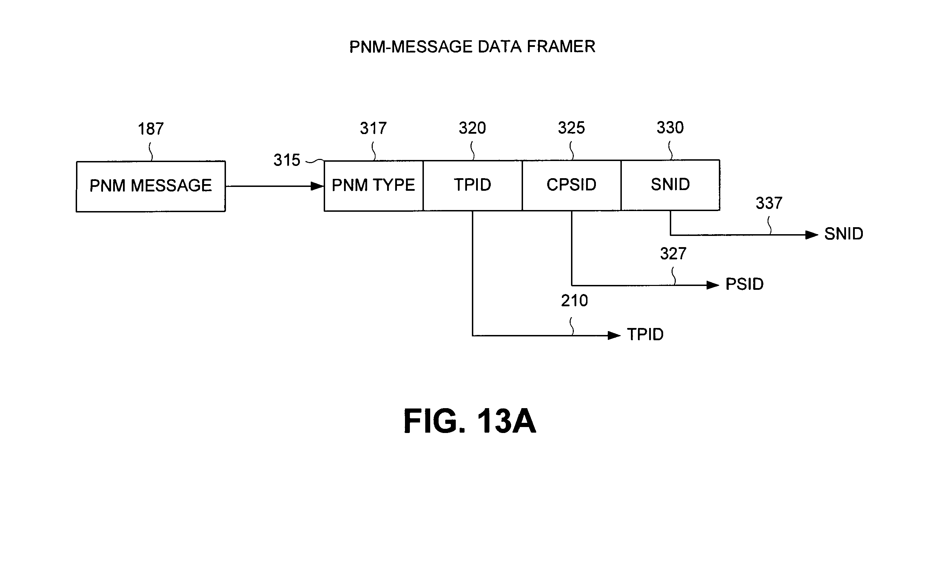

Fig. 13 is a pictorial diagram that depicts several alternative embodiments of a component product identifier data framer. It should be appreciated that one alternative embodiment of a product notice receiver 181 includes, as part of the receiver 180, a data framer for capturing a component product identifier message 186. According to one example alternative embodiment, a component product identifier message data framer 225 includes a field for capturing a product model number 230. According to another alternative illustrative embodiment, a component product identifier message data framer 225 includes a field for capturing a product identifier number 235. According to yet another example alternative embodiment, a component product identifier message data framer 225 includes a field for capturing a product serial number 240. And in yet another illustrative embodiment, a component product identifier message data framer 225 includes a field for capturing a product stock keeping unit (SKU) number 245. In yet another illustrative alternative embodiment, a component product identifier message data framer 225 includes a field for capturing a manufacturing lot code 250. In yet one additional illustrative embodiment, a component product identifier message data framer 225 includes a field for capturing a manufacturing date code 255. It should be appreciate that a value captured in any number of these are used in various combinations as a component product identifier which is later compared to a target product identifier (TPID) to determine when an incoming product notice message is to be acted upon by the product notice receiver 181.

Fig. 13A is a pictorial diagram that depicts several alternative example embodiments of a product notice message data framer. According to one alternative embodiment, the product notice message data framer 315 includes a field for capturing a target product identifier 320. It should be appreciated that the target product identifier field 320, according to various alternative example embodiments, includes one or more fields for capturing any combination of one or more of a model number, a product identifier number, a serial number, a stock keeping unit number, a lot code and a date code. Accordingly, the product notice message data framer 315 correlates in form with the form of the component product identifier data framer 225 heretofore described.

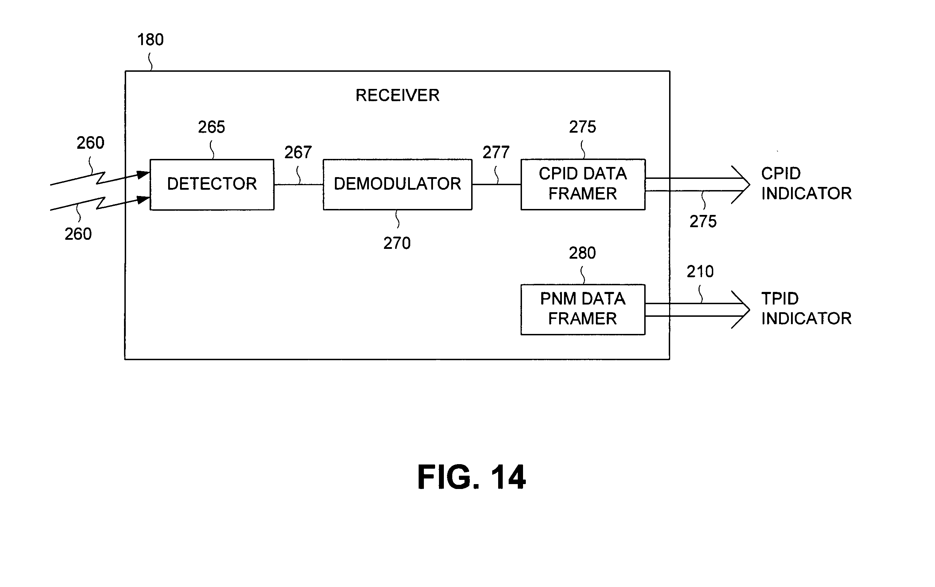

Fig. 14 is a block diagram that depicts one alternative example embodiment of receiver. According to this alternative embodiment, the receiver comprises a detector 265, a demodulator 270, and a data framer. According to one alternative example embodiment, the data framer comprises a component product identifier (CPID) data framer 275. According to yet another alternative example embodiment, the data framer comprises a product notice message (PNM) data framer 280.

According to one alternative example embodiment, the detector 265 comprises an antenna capable of detecting an electromagnetic field, the frequency of which is commensurate with radio frequencies. According to another alternative example embodiment, the detector comprises a photo detector capable of detecting a photon of light. According to one alternative embodiment, the detector comprises a photo diode. The receiver 180 discussed herein may include any type of detector 265 capable of detecting an electromagnetic field whose frequencies may reside anywhere in the electromagnetic spectrum. It should therefore be appreciated that a wide variety of detectors of varying technologies are capable of detecting an electromagnetic field. Accordingly, the claims appended hereto should not be limited to any example detector presented herein.

The detector 265 generates a detection signal 267 according to a detected electromagnetic field 260. The detection signal 267 comprises an electrical signal which varies according to a detected electromagnetic field 260. The demodulator 270 generates a data stream 277 by demodulating the detection signal 230. It should be appreciated that the demodulator 270, according to various alternative embodiments, comprises a demodulator capable of demodulating a signal that is encoded as amplitude modulation, frequency modulation, phase modulation, continuous phase modulation, phase shift keying modulation, minimum shift keying modulation, quadrature phase shift keying (QPSK) modulation and quadrature amplitude modulation (QAM). This enumeration of various modulation formats is presented herein to further illustrate the appended claims and is not intended to limit their scope.

It should also be appreciated that, according to yet another alternative embodiment, the demodulator 270 comprises a demodulator capable of demodulating a collection of simultaneous carriers, each of which is encoded with a like or different particular type of modulation and collectively are demodulated to form a data stream 277 by reassembling a sub-stream formed by demodulating one or more of the simultaneous carriers. The collection of carriers, according to yet another example embodiment, comprises a collection of orthogonal-frequency-division-multiplexed (OFDM) carriers. In such a situation, the various carriers can be modulated using a different modulation technique. For example, some carriers can be modulated using QPSK modulation while others can be modulated using QAM modulation.

The component product identification data framer 275 receives a bit-stream 277 provided by the demodulator 270. The component product identifier data framer 275 operates upon the bit-stream 277 in order to capture a component product identifier, which is used to generate a component product identifier indicator 200.

When the product notice message data framer 280 receives the bit-stream 277 provided by the demodulator 270, the product notice message data framer 280 operates upon the bit-stream 277 in order to capture a target product identifier. The target product identifier is then used to generate a target product identifier indicator 210.

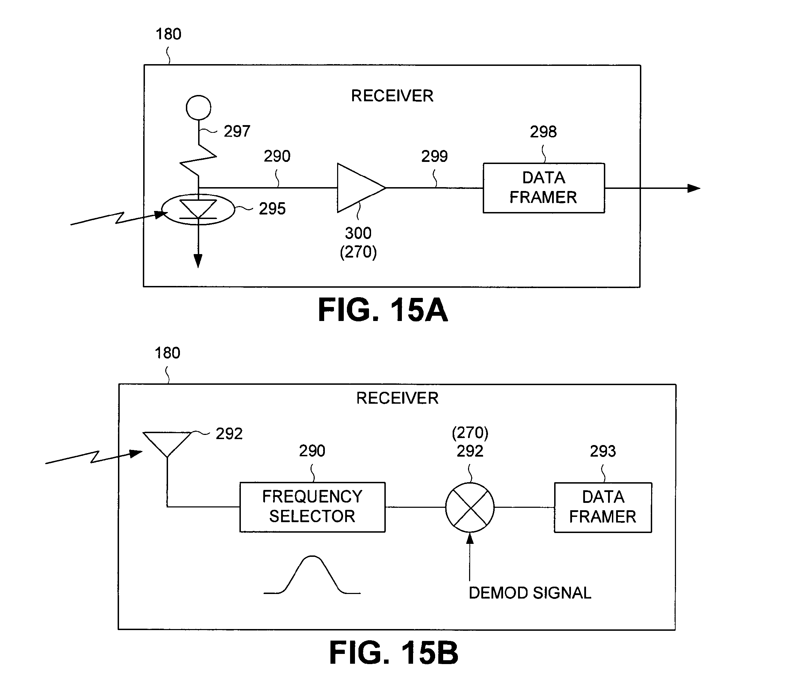

Figs. 15A and 15B are block diagrams that depict alternative example embodiments of detectors that enable wireless reception. According to one alternative embodiment, an electromagnetic field, the frequency of which is commensurate with optical energy, is detected by a photo-detector 295. Variations in an optical energy electromagnetic field, according to this alternative embodiment of a detector, are reflected (no pun intended) in an electrical signal 290 that varies according to said variations in the optical energy electromagnetic field. In yet another embodiment, the electrical signal 290 is converted by a comparator 300 into a digital data stream 299, which is directed to a data framer 298. It should be appreciated that a detector for detecting optical energy is typically selected so as to be sensitive to a particular wavelength of optical energy.

According to another alternative embodiment, an electromagnetic field, the frequency of which is commensurate with radio frequency signals, is detected by utilizing a radio frequency detector 292 (e.g. an antenna). According to this alternative embodiment, the output of the antenna is amplified with a frequency-selective amplifier 290. The output of the frequency-selective amplifier 290 is then directed to a demodulator (270) which is depicted in this figure as a simple mixer 292. The output of the demodulator 292 is directed to a data framer 293. It should still be appreciated that there are no limitations as to the frequency range of the electromagnetic field that may be encoded with information that can be received by the receiver 180. Accordingly, the claims appended hereto should not be limited to any example detector suitable for use in wireless reception of information.

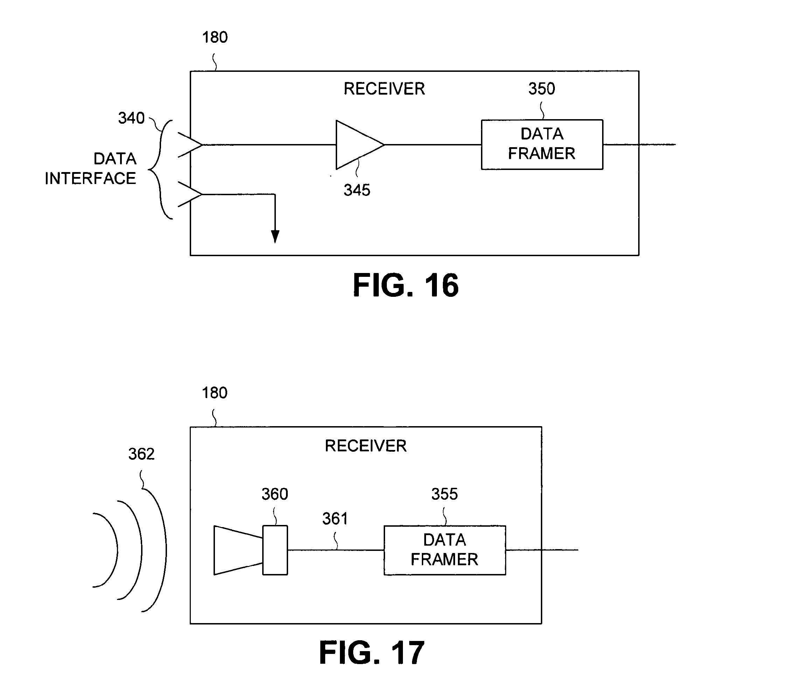

Fig. 16 is a block diagram that depicts one alternative example embodiment of receiver 180 where wired interface is preferred. According to this alternative embodiment, the receiver comprises a data interface 340 capable of receiving a data stream 315 and a data framer 320 capable of extracting at least one or a component product identifier and a target product identifier from the data stream. The data interface 340, according to one alternative example embodiment, comprises at least one of an analog interface and a digital interface.

In either embodiment, a conditioning unit 345 converts a signal arriving at the data interface 340 into a digital data stream that is directed to a data framer 350. The data framer then extracts at least one of a component product identifier (when a CPID message is received) and a target product identifier (when a PNM is received) from the digital data stream. Various data interfaces are contemplated including, but not limited to a serial data interface and a parallel data interface. Accordingly, the claims appended hereto should not be limited to any example data interface presented herein.

Fig. 17 is a block diagram that depicts one alternative example embodiment of receiver 180 for receiving acoustic signals. According to this alternative embodiment, the receiver comprises a transducer 360 capable of generating a data stream 361 according to a time-varying pressure wave 362. This alternative example embodiment further comprises a data framer 355. The data framer 355 then extracts at least one of a component product identifier (when a CPID message is received) and a target product identifier (when a PNM is received) from the digital data stream. The transducer 355 may be of a type that converts sonic energy into a time-varying electrical signal. Time-varying pressure waves 362 are encoded with information in accordance with various message formats (e.g. a CPID message and a PNM message) which the transducer 360 converts into a data stream 361 that is directed to the data framer 355. One alternative transducer is a microphone. It should be appreciated that a wide variety of transducers can be utilized to convert a time-varying pressure wave into a data stream. Accordingly, the claims appended hereto should not be limited to any example transducer for converting a time-varying pressure wave into a time-varying electrical signal.

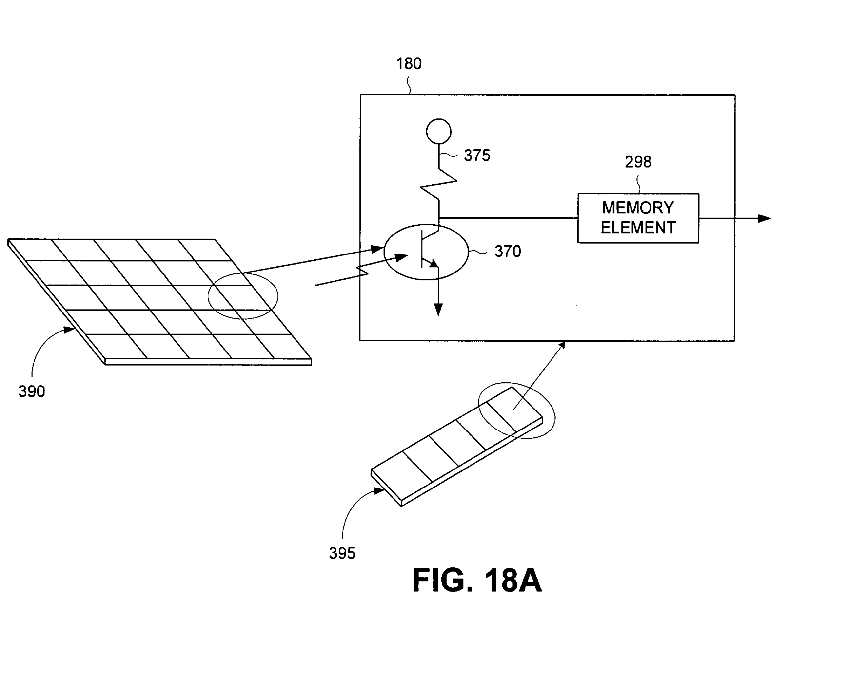

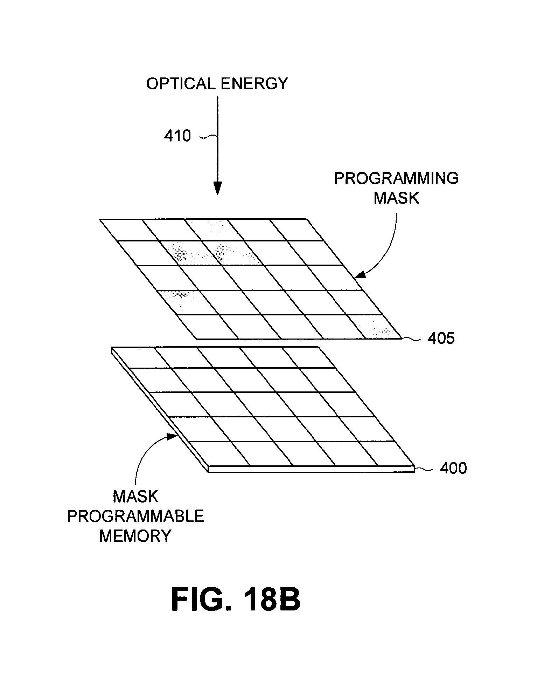

Fig. 18A is a pictorial diagram that depicts one alternative example embodiment of receiver. According to this alternative example embodiment, a receiver comprises an optical process element 370 which alters the State of a memory element 380 included in the memory 185. It should be appreciated that the optic lease sensitive element 370, according to one alternative embodiment, further includes a biasing mechanism 375. The biasing mechanism 375 acts to maintain a particular state, which is presented to the memory element 380 in absence of optical energy incident on the optically-sensitive element 370. It should further be appreciated that, according to yet another alternative embodiment, a plurality of optically-sensitive elements are included in the receiver 180, wherein each optically-sensitive element 370 corresponds to particular memory element 380 included in the memory 185. According to one alternative embodiment, the plurality of optically-sensitive elements 370 are arranged in a linear array 395. In yet another alternative embodiment, the plurality of optically-sensitive elements 370 are arranged in a two-dimensional array 390, which need not necessarily be rectangular in form.

Fig. 18A is a pictorial diagram that depicts an alternative embodiment of the receiver capable of preprogramming at a factory level. According to this alternative embodiment, a receiver comprises a mask programmable memory 400. The mask programmable memory 400 includes a proudly of optically-sensitive elements, which are programmed using a programming mast 405. Optical energy 410 is imparted onto the mask, which allows a portion of the optical energy 410 to fall upon certain particular optically-sensitive elements included in the programmable memory 400. The state of the optically-sensitive elements exposed to the optical energy 410, which are included in the mask programmable memory 400, are altered according to a pattern included in the programming mask 405.

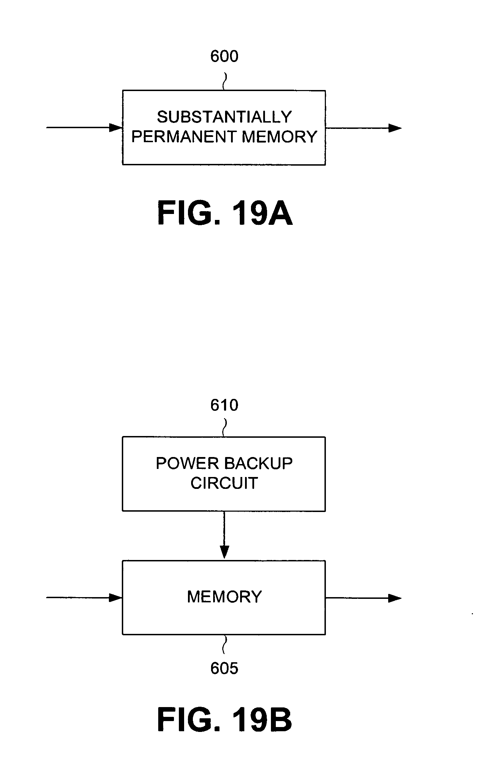

Fig. 19A is a block diagram that depicts one alternative example embodiment of memory. According to this alternative embodiment, the memory device comprises a substantially permanent memory 600. According to one alternative embodiment, the memory device 600 comprises at least one of an electrically erasable programmable memory, a fuse-programmable memory, an electrically programmable memory that is programmed using electrical signals and erased using optical energy and other non volatile memory types.

Fig. 19B is a block diagram that depicts an alternative example embodiment of a memory that is backed up using a power backup circuit. According to this alternative embodiment, a random access memory 605 is used to store information in a substantially permanent manner when the random access memory 605 is powered by a power backup circuit 610. The power backup circuit 610 maintains electrical power to the memory 605 and precludes inadvertent corruption of the contents of the memory 605 when the product notice receiver loses main operational power.

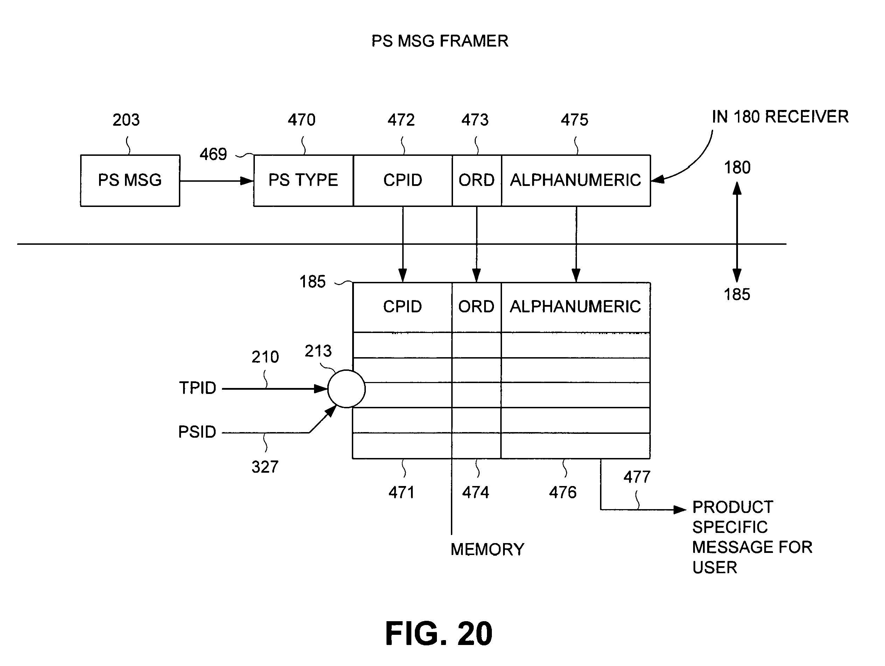

Fig. 20 is a block diagram that depicts one alternative example embodiment of a product notice receiver that includes product specific notice capability. According to this alternative embodiment, the receiver 180 further includes a product-specific notice message data framer 469. The memory 185 of this alternative embodiment is further capable of storing one or more product-specific notice messages in association with a corresponding component product identifier. As such, the memory 185 is organized into records, wherein each record includes a field 471 for storing a component product identifier, a field for storing an ordinal 474, and a field for storing a message 476. The message field 476, according to one alternative embodiment, stores at least one of a numeric message and a textual message. It should be appreciated that an alphanumeric message can likewise be stored in the message field 476.

As this alternative embodiment of a product notice receiver 181operates, it receives a product specific message 203. The product specific message 203 is received by the product specific message framer 469. A product specific message 203 includes a product specific type field 470, which is used to identify an incoming message as a product specific message 203. The product specific message framer 469 further includes a component product identifier field 472, which is used to extract a component product identifier from a received product specific message 203. According to yet another alternative embodiment, an ordinal field 473 is also included in a product specific message 203. Accordingly, the product specific message framer 469 includes an ordinal field 473, which is used to extract an ordinal value from an incoming product specific message 203. A message field is also included in a product specific message 203, and is captured by a message field 475 included in the product specific message framer 469. When a product specific message 203 is detected by the product notice receiver 181, this alternative embodiment creates a new record in the memory 185 and stores a component product identifier, an ordinal value, and a message (e.g. an alphanumeric message) in corresponding fields included in the newly created record.

Fig. 13A further illustrates that, according to yet another alternative embodiment, the product notice message data framer 315 further includes a product specific identifier field 325. The product specific identifier field 325 is used to extract a product specific identifier 327 from a received product notice message. Accordingly, a target product identifier 210 extracted by the product notice message data framer 315 is used in conjunction with the product specific identifier 327 to select a particular record in the memory 185 that is used to store a product specific notice message. It should be appreciated that the target product identifier 210 is used to select a record according to a component product identifier field 475 included in various records stored in the memory 185. The product specific identifier 327 is used to select a record according to the ordinal field 474. A message is that extracted from the message field 476 from a selected memory record to direct in 477 to the output interface 195, as depicted in Fig. 12.

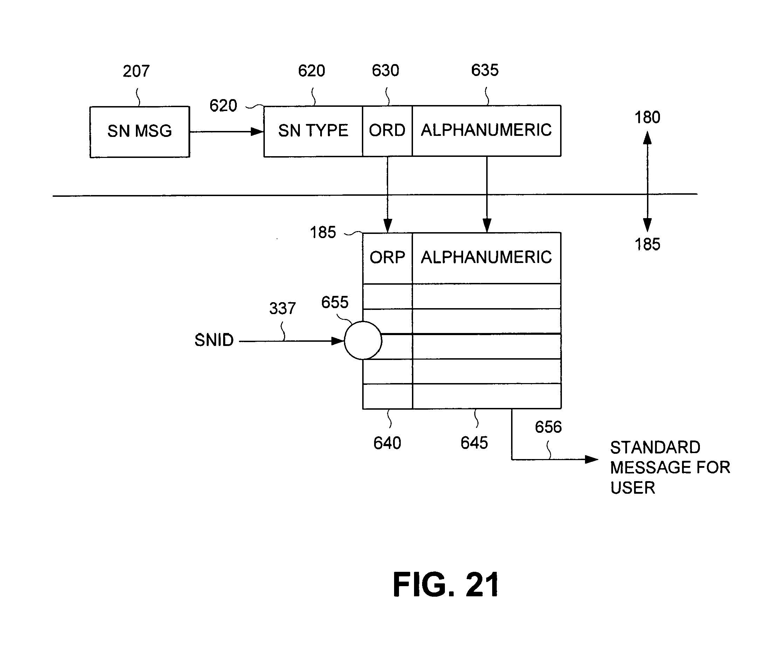

Fig. 21 is a block diagram that depicts one alternative embodiment of a product notice receiver that includes a standard notice message capability. According to this alternative example embodiment, the receiver 180 further includes a standard notice message data framer 620. The standard notice (SN) message data framer 620 includes a field for determining whether or not a received message comprises a standard notice message. This comparison field is called a SN Type field 625. The standard notice data framer 620 further includes an ordinal field 630, which is used to extract an ordinal number from a received standard notice message 207. The standard notice message data framer 620 further includes a message field 635, which is used to extract a message from a received standard notice message 207. In this alternative embodiment, the memory is organized into one or more records wherein each record includes an ordinal field 640 and a message field 645. When the receiver 180 receives a standard notice message 207, the standard notice message data framer 620 extracts an ordinal value (630) and the message (635) and presents these two the memory 185. The receiver 180 also creates a new record in the memory 185 and stores the extracted ordinal value (630) and the extracted message (635) in corresponding fields in the newly created record. It should be appreciated that the message (635), according to one alternative embodiment, comprises a numeric message. It yet another alternative embodiment, a message comprises a textual message. It should be appreciated that any alphanumeric message can be accommodated by the standard notice message data framer 620 and then stored in the memory 185.

Fig. 13A further illustrates that, according to yet another alternative embodiment, the product notice message data framer 315 further includes a standard notice identifier field 330. The standard notice identifier field 330 extracts a standard notice identifier from a received product notice message 187. When the receiver 180 receives a product notice message 187, the product notice message data framer 315 extracts a standard notice identifier and presents 337 the standard notice identifier to the memory 185. The standard notice identifier 337 is used to select 655 a standard notice stored in the memory 185 (which was stored in the memory when the receiver 180 previously received a standard notice message 207). Accordingly, the standard notice identifier 337 is used to select a message stored in the memory 185 according to an ordinal value, which is stored in the ordinal field 640 of a particular record stored in the memory 185. Once a record a selected according to a comparison of the standard notice identifier 337 to a stored ordinal value, a message is retrieved from the message field 645 of the selected record and presented 656 to the output interface 195. The output interface then makes the retrieved standard notice message 656 available either internally or external to the product notice receiver 181.

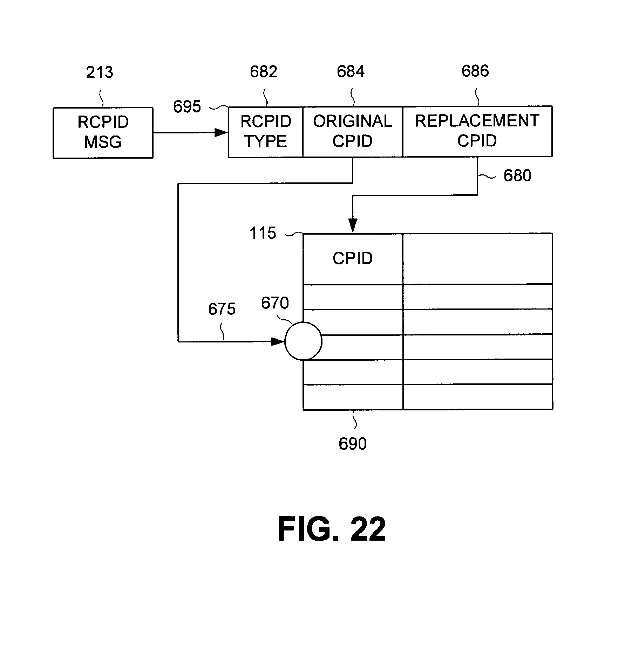

Fig. 22 is a block diagram that depicts one alternative embodiment of a product notice receiver capable of accepting a replacement component identifier. It should be appreciated that, was a component product identifier is received by a product notice receiver 181, there may be occasioned to replace a particular component identifier at some point in time in the future. Accordingly, this alternative embodiment of a product notice receiver 181 further includes a replacement component product identifier data framer 695, which is included in the receiver 180. In this alternative embodiment, the replacement component product identifier (RCPID) data framer 695 includes a comparison field to called an RCPID type field 682, which is used to determine when a message received by the product notice receiver 181 comprises a replacement component product identifier message 213. When a replacement component product identifier message 213 is received by the product notice receiver 181, the replacement component product identifier data framer 695 extracts an original component product identifier 675 from the received message using an original component product identifier field 684. The replacement component product identifier data framer 695 also extracts a replacement component identifier 680 from a received message using your place a component identifier field 686. Upon receipt of a replacement component product identifier message 213, the receiver 180 presents the original component product identifier 675 to the memory 185, which is used to select a record in a component list. A record is selected according to a component product identifier field 690 included in one or more records that collectively comprise a component list stored in the memory185. The replacement component product identifier 680, which is provided by the component product identifier data framer 695, is then stored in the selected record by replacing the value stored in the component product identifier field 690 of the selected record. This results in the replacement of a component product identifier stored in a component listed stored in the memory 185.

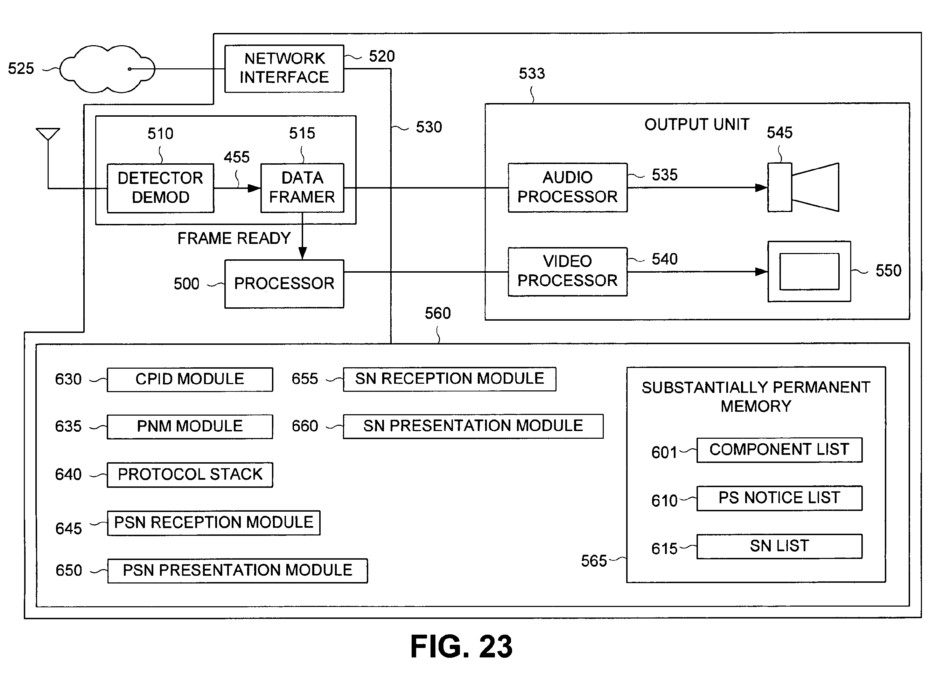

Fig. 23 is a block diagram that depicts several example alternative embodiments of a product notice receiver capable of accepting a component list. According to one example embodiment, a product notice receiver comprises one or more processors 500, a message receiver 503, an output unit 533 and a memory 560. According to one alternative example embodiment, any portion or all of the memory 560 comprises a substantially permanent memory, e.g. non-volatile memory. The message receiver 503 is capable of receiving a message frame and providing said message frame to the processor 500. In operation, the output unit 533 provides an output indication according to a direction received from the processor 500. It should be appreciated that the aforementioned elements are communicatively associated with each other be means of a bus 530.

Various example embodiments of a product notice receiver as heretofore described further include various functional modules each of which comprises an instruction sequence that can be executed by the processor 500. An instruction sequence that implements a functional module, according to one alternative embodiment, is stored in the memory 560. The reader is advised that the term "minimally causes the processor" and variants thereof is intended to serve as an open-ended enumeration of functions performed by the processor 500 as it executes a particular functional module (i.e. instruction sequence). As such, an embodiment where a particular functional module causes a processor 500 to perform functions in addition to those defined in the appended claims is to be included in the scope of the claims appended hereto.

The functional modules (and their corresponding instruction sequences) described thus far that enable receipt of a product notice message, according to one alternative embodiment, imparted onto computer readable medium. Examples of such medium include, but are not limited to, random access memory, read-only memory (ROM), Compact Disk (CD) ROM, Digital Versatile Disk (DVD), floppy disks, hard disk drives and magnetic tape. Yet other examples include, but are not limited to a software download channel wherein an instruction sequence is received by means of a communications channel and then stored in the memory 560. These forms of computer readable medium, which alone or in combination can constitute a stand-alone product, can be used to convert a general-purpose computing device into a product notice receiver wherein said product notice receiver is capable of receiving a product notice message according to the techniques and teachings presented herein. Accordingly, the claims appended hereto are to include such computer readable medium imparted with such instruction sequences that enable execution of the present method and all of the teachings herein described.

In one alternative example embodiment, the memory 560 is used to store a component product identifier (CPID) module 630, which is included in this example alternative embodiment. Also included in this example embodiment is a product notice message module 635 that is also stored in the memory 560. In yet another alternative example embodiment, the memory 560 is used to store a product specific notice (PSN) reception module 645 and a product specific notice presentation module 650. A standard notice (SN) reception module 655 is included in yet another alternative example embodiment and is stored in the memory 560. Also included in this alternative example embodiment is a standard notice presentation module 660.

The memory in one alternative example embodiment is used to store a component list 601. In yet another alternative example embodiment, the memory 560 is used to store a product specific notice list 610. In yet another alternative example embodiment, the memory 560 is used to store a standard notice list 615.

In one alternative embodiment, a product notice receiver further comprises a network interface 520. It should be appreciated that the network interface, according to one alternative example embodiment, comprises a packet-oriented data interface (e.g. an Ethernet interface). According to one alternative example embodiment, the network interface 520 comprises a wireless network interface. In yet another alternative example embodiment, the network interface 520 comprises a wired network interface.

The message receiver, according to one alternative example embodiment, comprises a detector 510 and a data framer 515. It should also be appreciated that the detector 510 according to other example embodiments, includes, but is not limited to any one or more of the various detectors specified *supra* (e.g. serial interface, parallel interface, acoustic interface, optical interface). It should also be appreciated that the detector, according to one alternative embodiment, comprises a wired interface. In yet another alternative example embodiment, the detector comprises a wireless interface commensurate with the teachings *supra.*

Fig. 23 further illustrates that, according to one example alternative embodiment, the output unit comprises an audio processor 535 capable of generating an audio signal according to a directive received from the processor 500. In yet another alternative example embodiment, the output unit comprises a video processor 540 capable of generating a video signal according to a directive received from the processor 500. It should be appreciated that the output unit 533, according to one example embodiment, is a simple output port that is capable of generating signal that can be used to enable an external indicator or audible annunciator. Accordingly, such a simple output port is generating used to capture a directive received from the processor 500.

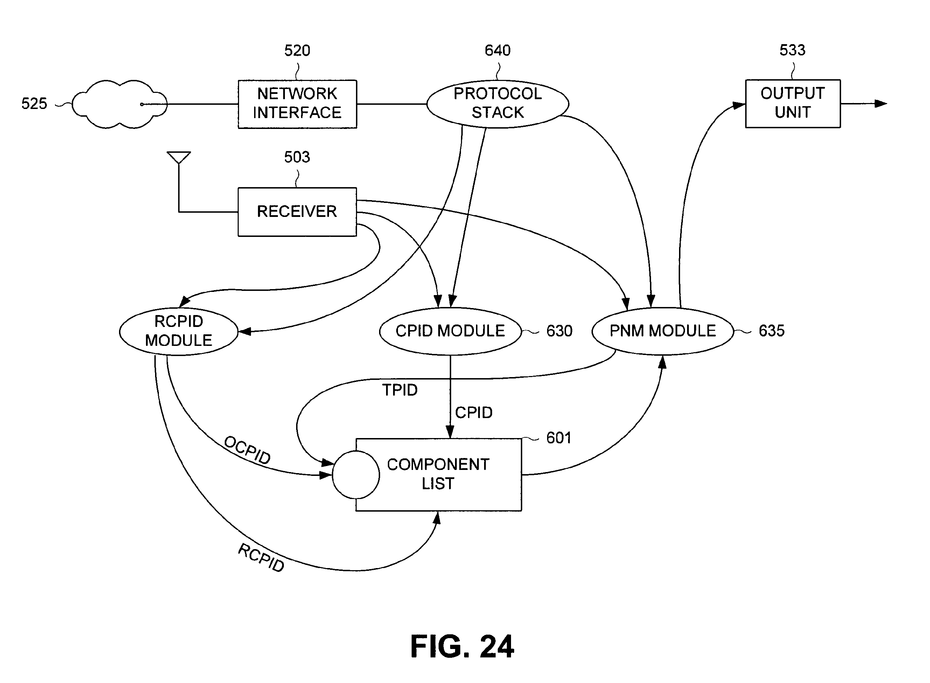

Fig. 24 is a data flow diagram that depicts the internal operation of a product notice receiver as it operates to receive a product notice. Stored in the memory 310 of one example embodiment are several functional modules including a component product identification module 630 that, when executed by the processor 500, minimally causes the processor to extract a component product identifier from the message frame and also store the component product identifier in a component table 601 stored in the memory 560 when the message frame contains a component product identifier message. In one example alternative embodiment, the component product identification module 630, when executed by the processor 500, minimally causes the processor to retrieve a message from the message receiver 503 before the processor is caused to extract a component product identifier from the message frame. In yet another example alternative embodiment that further comprises a network interface and a protocol stack, the processor executes the protocol stack 640 in order to receive a message by means of the network interface. The mechanics of this functionality are described infra. In yet another example embodiment, the component product identification module 630 causes the processor to receive a component product identifier that comprises at least one of a product serial number, a product stock keeping unit number, a lot code and a date code. In one example alternative embodiment, the component list 601 stored in the memory 560 comprises a table that is used to store one or more records. Each of the records stored in the component list 601 is used to store a component product identifier. It should be appreciated that one alternative example embodiment of the data framer 515 included in the receiver 503 is capable of receiving a component product identifier message 255 as described above with respect to Fig. 13.

Included in the memory 560 of this example embodiment is a product notice message module 635 that, when executed by the processor 500, minimally causes the processor to extract a target product identifier from a message frame received from the message receiver 503 when the message frame contains a product notice message. The product notice message module 635 further minimally causes the processor 500 to direct an indication directive to the output unit 533 when the target product identifier extracted from a product notice message is substantially equivalent to at least one of one or more component product identifiers stored in the component table 601.. It should be appreciated that one alternative example embodiment of the data framer 515 included in the receiver 503 is capable of receiving a product notice message 315 as described above with respect to Fig. 13A.

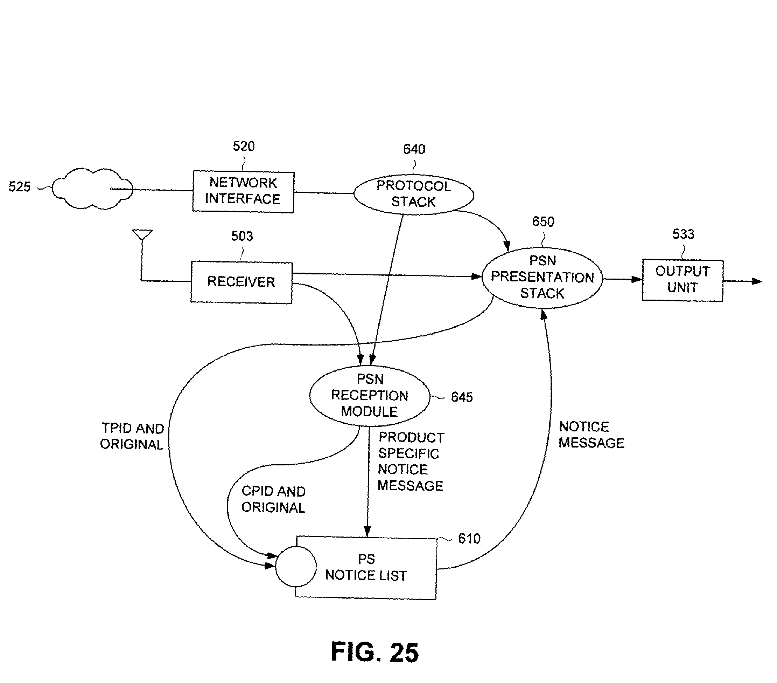

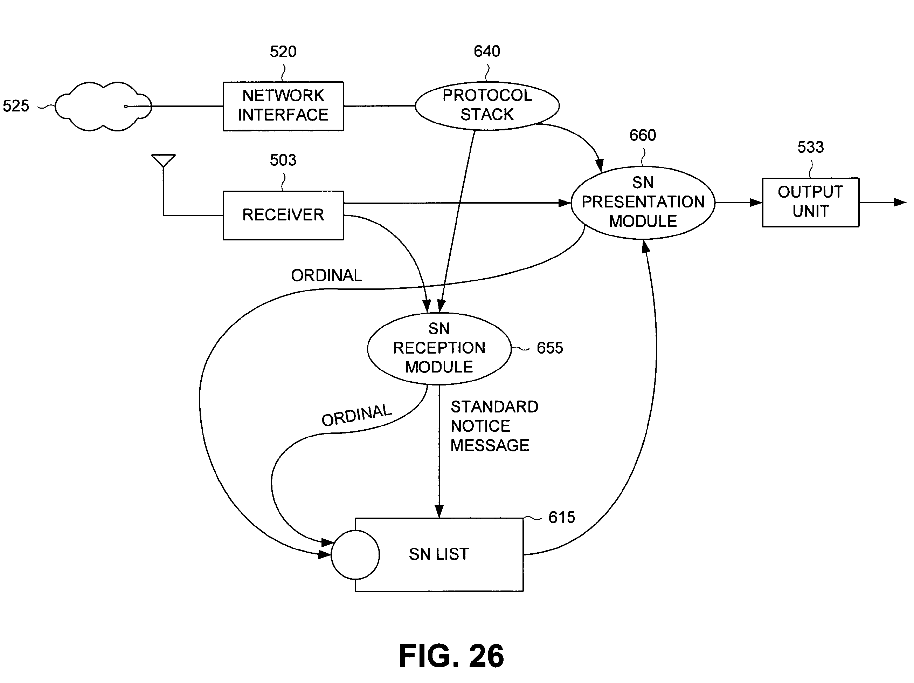

Fig. 25 is a data flow diagram that depicts the internal operation of a product notice receiver as it operates to receive a product specific notice. Also included in one alternative example embodiment of a product notice receiver is a product specific notice (PSN) reception module 645 and a product specific notice presentation module 650, both of which are stored in the memory 560. In this example alternative embodiment, the memory 560 is used to store a product specific notice list 610. The product-specific notice reception module 645, when executed by the processor, minimally causes the processor to extract a product-specific notice message, a component product identifier and an ordinal value from a message frame received from the message receiver 503 and also store the product-specific notice messages in association with the component product identifier and the ordinal value in the product specific notice table 610 stored in the memory when the message frame contains a product-specific notice message. It should be appreciated that one alternative example embodiment of the data framer 515 included in the receiver 503 is capable of receiving a product specific notice message 469 as described above with respect to Fig. 20.

The product-specific notice presentation module, when executed by the processor, minimally causes the processor to extract a target product identifier and a product-specific notice identifier from a message received from the message receiver when the message frame contains a product notice message. It should be appreciated that one alternative example embodiment of the data framer 515 included in the receiver 503 is capable of receiving a product notice message 315 as described above with respect to Fig. 13A. Using the extracted target product identifier and a product-specific notice identifier, the product specific notice presentation module 650 minimally causes the processor 500 to select a product-specific notice message from the product-specific notice table 610 stored in the memory according to a comparison of the target product identifier to a component product identifier stored in the product-specific notice table and a comparison of the product-specific notice identifier to an ordinal value stored in the product-specific notice table. The selected product specific notice message is then directed to the output unit 533 as the processor continues to execute the product specific notice presentation module 650. It should be appreciated that, according to one example alternative embodiment, at least one of the product specific notice reception module 645 and the product specific notice presentation module 650 causes the processor to receive a message frame by minimally causing the processor to execute a protocol stack 640. This enables the processor to receive a message by means of the network interface 520.

In yet another alternative example embodiment, a standard notice reception module 655 is included in the embodiment and stored in the memory 560. In yet another alternative example embodiment, a standard notice presentation module is included in the embodiment and is stored in the memory 560. In these alternative example embodiments, the memory 560 is used to store a standard notice list 615.

The standard notice reception module 655, when executed by the processor 500, minimally causes the processor 500 to extract a standard notice message and an ordinal value from a message received from the message receiver 503 and also store the standard notice message in association with the ordinal value in a standard notice table 615 stored in the memory 615 when the message frame contains a standard notice message. It should be appreciated that one alternative example embodiment of the data framer 515 included in the receiver 503 is capable of receiving a standard notice message 620 as described above with respect to Fig. 21.

The standard notice message presentation module, when executed by the processor, minimally causes the processor to extract a standard notice identifier from a message received from the message receiver 503 when the message contains a product notice message. Using the extracted standard notice identifier, the standard notice message presentation module further minimally causes the processor 500 to select a standard notice message from the standard notice table 615 stored in the memory according to a comparison of the standard notice identifier with an ordinal value stored in the standard notice table. The standard notice presentation module further minimally causes the processor to direct the selected standard notice message to the output unit 533.

Fig. 24 further illustrates that, according to one alternative embodiment, a product notice receiver further includes a replacement component product identifier (RCPID) module 651. The replacement component product identifier module 651, when executed by the processor 500, minimally causes the processor to extract a replacement product identifier and an original component product identifier from a message received from the message receiver 503 and store the replacement component product identifier in the component table 601 stored in the memory when the message frame contains a replacement product identifier. As such, a record is selected by the processor according to an original component product identifier extracted from the received message and the replacement component product6 identifier is substituted for the original component identifier stored in the selected record. It should be appreciate that the message receiver included in one alternative embodiment is capable of receiving a replacement component identifier message 620 as described above in reference to Fig. 21.

Again, it should be appreciated that where the processor operates on any of various received messages including, but not limited to a component product identifier message, a product notice message, a product specific notice message, a standard notice message and a replacement component product identifier message, such messages are received using at least one of the message receiver 503 and the network interface 520. In those embodiments where a message is received by means of the network interface 520, the processor executes a protocol stack which minimally causes the processor to receive a message by means of a communications connection established in accordance with a particular communications protocol As such, it is to be appreciated that the protocol stack embodies a function enabling the processor to engage in communications according to the particular protocol. One example of such a protocol is the transmission control protocol / Internet protocol (TCP/IP). It should be appreciated that this example protocol is introduced here merely to illustrate one example embodiment and is not intended to limit the scope of the claims appended hereto.

While the present method and apparatus has been described in terms of several alternative and exemplary embodiments, it is contemplated that alternatives, modifications, permutations, and equivalents thereof will become apparent to those skilled in the art upon a reading of the specification and study of the drawings. It is therefore intended that the true spirit and scope of the claims appended hereto include all such alternatives, modifications, permutations, and equivalents.

## Claims

1. A method for receiving a product notice comprising:
receiving a component product identifier (5) for one or more components included in an assembly;
storing the one or more component product identifiers (10);
receiving a product notice message (15);
extracting a target product identifier (17) from the product notice message; and
issuing an indication (25) when the target product identifier is substantially equivalent to at least one of the one or more stored component product identifiers (20).

2. The method of Claim 1 further comprising:
receiving one or more product-specific notice messages (120) for a component product identifier;
storing the one or more product-specific notice messages (125);
extracting a product-specific notice identifier (130) from the product notice message;
selecting (135) one of the one or more stored product-specific notice messages according to the product-specific notice identifier and the target product identifier; and
presenting (140) the selected one or more stored product-specific notice messages to a user.

3. The method of Claim 1 further comprising:
receiving (145) one or more standard notice messages;
storing (150 the one or more standard notice messages;
extracting (155) a standard notice identifier from the product notice message; selecting (160) one of the one or more stored standard notice messages according to the standard notice identifier; and
presenting (165) the selected one or more stored standard notice messages to a user.

4. The method of Claim 1 further comprising:
receiving a replacement product identifier (170) for a component included in the assembly; and
storing the replacement product identifier (175).

5. A product notice receiver comprising:
receiver (180) capable of receiving at least one of a component product identifier message (186) and a product notice message (187);
memory (185) capable of storing (471) one or more received component product identifiers included in a component product identifier message;
comparator (190) capable of generating a match signal when a target product identifier in a received product notice message is substantially equal to at least one of the component product identifiers stored in the memory (185); and
output interface (195) capable of generating an indication signal according to the match signal.

6. The product notice receiver of Claim 12 wherein
the receiver is further capable of receiving one or more product-specific notice messages (203) associated with a corresponding component product identifier and wherein
the memory (185) is further capable of storing (474, 476) the one or more product-specific notice messages associated with the corresponding component product identifier and wherein
the receiver further comprises a framer (469) capable of extracting a target product identifier and a product-specific notice identifier from a product notice message and wherein the product notice receiver further comprises:
selector (213) capable of selecting a product-specific notice message from the memory (185) according to the target product identifier (210) and the product-specific notice identifier (327) and wherein
the output interface is further capable of making available the selected product-specific notice message.

7. The product notice receiver of Claim 12 wherein
the receiver is further capable of receiving one or more standard notice messages(207) and wherein
the memory (185) is further capable of storing (640, 645) the one or more standard notice messages and wherein
the receiver further comprises a framer (620) capable of extracting a standard notice identifier from a product notice message and wherein the product notice receiver further comprises:
selector (655) capable of selecting a standard notice message from the memory according to the standard notice identifier (337) and wherein
the output interface is further capable of making available the selected standard notice message.

8. The product notice receiver of Claim 12 wherein
the receiver is further capable of receiving a replacement component product identifier (686) message for a component included in the assembly and
the memory (185) is further capable of storing the replacement component product identifier.

9. A product notice receiver comprising:
receiver (510, 515, 520) capable of receiving a message frame;
processor (500) capable of executing an instruction sequence;
output unit (533) capable of providing an output signal in response to direction from the processor;
memory (560) capable of storing one or more instruction sequences;
one or more instruction sequence stored in the memory including:
component product identification module (630) that, when executed by the processor, minimally causes the processor to:
extract a product identifier from the message frame and also
store the component product identifier in a component table (601) stored in the memory when the message frame contains a component product identifier message;
product notice message module (635) that, when executed by the processor, minimally causes the processor to:
extract a target product identifier from the message frame when the message frame contains a product notice message; and
direct an indication to the output unit when the target product identifier is substantially equivalent to at least one of the component product identifiers stored in the component table (601).

10. The product notice receiver of Claim 9 further comprising:
product-specific notice reception module (645) stored in the memory (560) that, when executed by the processor (500), minimally causes the processor to:
extract a product-specific notice message, a component product identifier and an ordinal value from the message frame and also store the product-specific notice messages in association with the component product identifier and the ordinal value in a product specific notice table (610) stored in the memory when the message frame contains a product-specific notice message;
product-specific notice presentation module (650) that, when executed by the processor (500), minimally causes the processor to:
extract a target product identifier and a product-specific notice identifier from the message frame when the message frame contains a product notice message;
select a product-specific notice message from the product-specific notice table (610) stored in the memory (560) according to a comparison of the target product identifier to a component product identifier stored in the product-specific notice table and a comparison of the product-specific notice identifier to an ordinal value stored in the product-specific notice table; and
direct the selected product-specific notice message to the output unit (533).

11. The product notice receiver of Claim 9 further comprising:
standard notice message reception module (655) stored in the memory that, when executed by the processor (500), minimally causes the processor to:
extract a standard notice message and an ordinal value from the message frame and also store the standard notice message in association with the ordinal value in a standard notice table (615) stored in the memory when the message frame contains a standard notice message;
standard notice message presentation module (660) stored in the memory that, when executed by the processor, minimally causes the processor to:
extract a standard notice identifier from the message frame when the message frame contains a product notice message;
select a standard notice message from the standard notice table (615) stored in the memory according to a comparison of the standard notice identifier with an ordinal value stored in the standard notice table; and
direct the selected standard notice message to the output unit (533).
